# EUROPEAN PATENT SPECIFICATION

(11) **EP 4 478 880 B1**
(45) Date of publication and mention of the grant of the patent: **29.04.2026**
(21) Application number: 23706748.3
(22) Date of filing: 21.02.2023
(51) Int. Cl.: A01M 1/02, A01M 1/10

(54) **DEVICE FOR ATTRACTING DIPTERA OF THE CERATITIS TYPE AND TRAPPING DEVICE**
VORRICHTUNG ZUM ANLOCKEN VON DIPTEREN VOM CERATITIS-TYP UND FANGVORRICHTUNG
DISPOSITIF POUR ATTIRER LES DIPTÈRES DU TYPE CÉRATITE ET DISPOSITIF DE PIÉGEAGE

(30) Priority: 26.04.2022 EP 22382395
(43) Date of publication of application: 25.12.2024
(73) Proprietor: Probodelt S.L., 43870 Amposta (ES)
(72) Inventor: ROIG PIÑAS, Anna, 43870 Amposta (Tarragona) (ES); RAMONEDA MOLINS, Joan, 43870 Amposta (Tarragona) (ES); ROIG PIÑAS, Jaume, 43870 Amposta (Tarragona) (ES); ROIG REVERTÉ, Jordi, 43870 Amposta (Tarragona) (ES); ROIG PIÑAS, Josep, 43870 Amposta (Tarragona) (ES)
(74) Representative: Isern Patentes y Marcas S.L.
(86) International application number: PCT/EP2023/054327
(87) International publication number: WO 2023/208443

(56) References cited:
- EP-A1- 2 489 261
- EP-A1- 2 559 338
- WO-A1-2007/068329
- WO-A1-2016/123625
- WO-A1-2020/127785
- WO-A1-99/45772
- US-A- 4 947 578
- US-A- 5 008 107
- US-A- 5 229 126

## Description

### TECHNICAL FIELD OF THE INVENTION

The present invention relates to field of devices for attracting *Ceratitis capitata* and trapping device for capturing and eliminating such insects that makes use of the aforementioned device.

### STATE OF THE ART

It is known that fruit flies, which belong to the order Diptera, damage ripe fruits, such as blueberries, cherries, mangos, kiwis, etc. Among Diptera, which causes serious problems in the cultivation of citrus and stone fruit and seed and, due to the growth of organic crops that require pest control techniques which, above all, avoid spraying chemical agents on farms, it has been necessary to implement safe methods of pest prevention, control and treatment.

In order to avoid spraying, the use of attractants alone or in combination within traps or mass trapping devices have been widely used. These systems make use of the attractant composition which may be placed inside the trapping device to release an attractant composition to attack the insect towards the device into an entrapment chamber or confinement chamber.

There are number of devices that comprise an attractant composition for the genus *Ceratitis.* For example, ES2257219B1 disclosed a trapping device comprising an enveloped type diffuser container containing attractant compositions for *Ceratitis capitata.* Said diffuser container comprises inside a support material made of cellulose which is impregnated with a solution comprising cadaverine, ammonium acetate and trimethylamine. Furthermore, the container is made of an impermeable sheet composed by aluminum, polyethylene and polyester and has a nonwoven polyethylene that allows vapor emission of the attractant components controllably.

EP3127426A1 disclosed a diffuser which comprises a dry powder mixture composition containing attractant substances for *Ceratitis capitata,* such as ammonium acetate, trimethylamine hydrochloride and a diaminoalkane, along with powdery sodium polyacrylate. The powder composition is placed inside a packet which comprises a permeable membrane on one side that allows the exchange of vapors of the attractant substances and a material that is impermeable to vapors on the other side. However, the diffusers comprising dry mixtures present some drawbacks. Once dry mixtures are manufactured, they need to be stored in hermetic recipients before they are introduced into the packets that conform the diffusers. These diffuser devices also need to absorb water or water vapor before prior to been activated, being this process too long, usually about several weeks. The attractant compositions of EP3127426A1 have the disadvantage that they comprise a diaminoalkane, such as cadaverine. Cadaverine and putrescine are among the most common biogenic amines (BA) in foods, but it is advisable that their accumulation be avoided.

Later on, other publications such as PCT/EP2020/087442 disclosed a device for attracting *Ceratitis capitata* comprising a container made of a permeable material such as polyurethane or polyamide. The container has the shape of a packet and comprises an aqueous solution containing attractant substances for Diptera such as ammonia, trimethylamine or triethylamine, which are released thought out the walls of the container. The aforementioned device has the disadvantage that a good controlled release of the attractants is difficult due to the broad surface of said device. Moreover, when the aqueous composition is fully consumed, the device needs to be completely replaced. Moreover, special care needs to be applied when handled, as the vapors are released through the walls of the entire container increasing the risk of irritating or damaging the skin of the operator. WO 2007/068329 A1 describes a trapping device for insects. The device comprises trapping means and a single diffuser comprising a permeable membrane, which lets water and solutions in the liquid phase pass in and out of the diffusers arranged inside the trapping means. The diffuser is made up of a container containing inside a support material. This support material, which is of the porous type, is impregnated with a solution comprising a diaminoalkane, ammonium acetate and trimethylamine.

Therefore, there is a need in the prior art to overcome the cited problems to provide a device for attracting Diptera, and method thereof, which have the following advantages:
- Allows a prolong and controlled release of the attractant composition while attracting a high number of dipterans.
- Provides an effective attractant composition, which may not need the use of aminoalkanes while being effective.
- Reduced number of materials and steps for its production.
- Ready to use in the field and within mass trapping devices to attract and kill a high number dipteran and
- which allows a good handle reducing the risk of being in contact with any toxic or irritating substance.

### SUMMARY OF THE CLAIMED INVENTION

The present invention claims :
a device for attracting dipterans according to claim 1;
a method for obtaining such a device, according to claim 12; and
a method for trapping dipterans according to claim 14. Preferred embodiments are claimed in the dependent claims 2-11,13.

### SUMMARY OF THE DISCLOSURE

A first aspect relates to a device (1) for attracting dipterans, preferably *Ceratitis capitata* fly, that comprises:
- a container (2) comprising walls (3), a bottom (4) and an opening (5) that is closed with a lid (6), wherein the lid (6) comprises a membrane (6A) which comprises a semi-permeable material
- wherein the walls (3) and the bottom (4) are made of an impermeable material, and
- wherein the content of said container (2) consists of an aqueous composition (7), wherein said aqueous composition comprises attractant salts for dipterans.

Said device (1) has the advantage that allows a prolong and controlled release of the vapors of the aqueous composition (7) through the membrane (6A), while attracting a high number of Diptera. Said device allows an effective and prolong release of the attractants without the need to use any support material wherein the attractant composition is absorbed.

Furthermore, the device (1) of the first aspect is a ready-to-use device that can be easily incorporated in a trapping device (8) to be placed in the field. Furthermore, and the device (1) can be easily replaced when the aqueous composition (7) is fully consumed.

The shape and characteristics of the device (1) provides good controlled and prolong release of its composition which helps to reduces or minimizes the undesired loss of the attractant substances. Furthermore, the device (1) does not comprise a cellulose support wherein the aqueous composition (7) is absorbed to ensure the adequate adsorption and release of the composition by capillarity as needed in the prior art. Preferably, it does not comprise a support. Hence the device (1) comprises a small number of components allowing an easier and more feasible manufacturing process comprises said process less steps.

Furthermore, the device (1) of the first aspect, distinctively from other devices, has the advantage that, as it comprises an aqueous composition (7), said composition (7) does not need to be stored in a separate hermetic recipient; it can be directly incorporated into the attractant device (1) once it is manufactured

A second aspect describes a method for obtaining the device (1) according to the first aspect, the method comprising the steps of:
(i) providing an aqueous composition (7), wherein the composition comprises attractant salts for dipterans and water,
(ii) filling an empty container (2) with the composition obtained in step (i), wherein said container (2) comprises an opening (5), walls (3) and a bottom (4), both the walls (3) and the bottom (4) made of an impermeable material,
(iii) closing, preferably hermetically, the opening (5) of the container (2) with a lid (6) which comprises a membrane (6A), wherein said membrane comprises a semi-permeable material.

A third aspect refers to a device (1) obtainable by the method of the second aspect.

A fourth aspect relates to a method for attracting and trapping dipterans that comprises:
(i) introducing the device (1) according to the first or the third aspect or the device obtained from the second aspect, inside a trapping device (8),
(ii) leaving the trapping device (8) of step i) for a at least 2 days in a place of interest.

A fifth aspect refers to the use of the device (1) according to any of the first or the third aspect or the device obtained from the second aspect, to attract dipterans.

A sixth aspect, relates to a trapping device (8) adapted to attract and kill Diptera from a genus selected from the list consisting of *Bractocera spp., Ceratitis spp,* preferably the *Ceratitis capitata* fly, wherein said trapping device (8) comprises:
- an entrapment chamber (9) confined by a lid (10), which is removably attached to said chamber, wherein the entrapment chamber (9) comprises:
   o walls
   o at least one inlet (11) configured for the entry of Diptera, and
   o at least one contact insecticide (not shown)
   wherein the inner wall of the entrapment chamber (9) is at least partially coated with the contact insecticide (not shown);
   and
- the device (1) of the first aspect placed within the entrapment chamber (9).

### BRIEF DESCRIPTION OF THE FIGURES

**Figure 1****.** Comparison of cumulative values of trapped and killed flies, present invention VS figure 7 of ES2257219B1. Cumulative values of trapped and killed flies over time corresponding to trapping devices comprising the devices prepared as in Example 1 (E1), Example 2 (E2) and Reference example (RE).
**Figure 2****.** Comparison of cumulative values of trapped and killed flies, present invention VS figure 8 of ES2257219B1. Cumulative values of trapped and killed flies over time corresponding to trapping devices comprising the devices prepared as in Example 1 (E1), Example 2 (E2) and Reference example (RE).

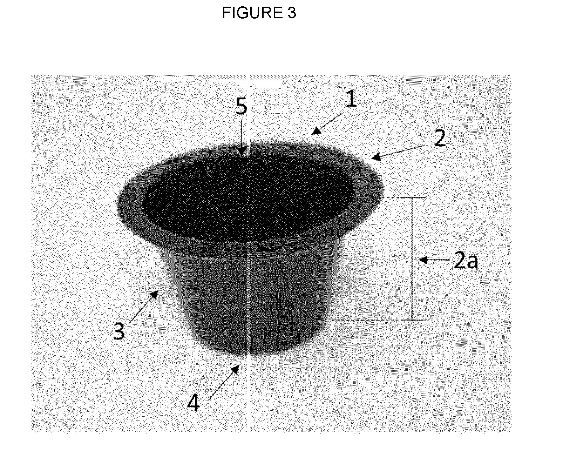

**Figure 3****.** Container (2) of the device (1) for attracting *Ceratitis capitata.* Container (2) with walls (3), a bottom (4), an opening (5).

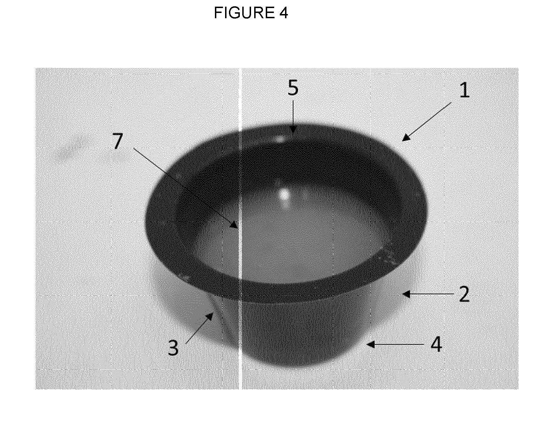

**Figure 4****.** Container (2) of the device (1) for attracting *Ceratitis capitata* filled with the aqueous composition (7). Container (2), height of the container (2a), with walls (3), a bottom (4), an opening (5) and the aqueous composition (7).

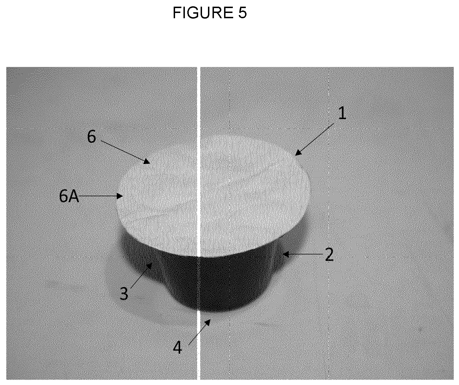

**Figure 5****.** Device for attracting *Ceratitis capitata.* Device (1) comprising a container (2) and the walls (3), a bottom (4), lid (6) and membrane (6A).

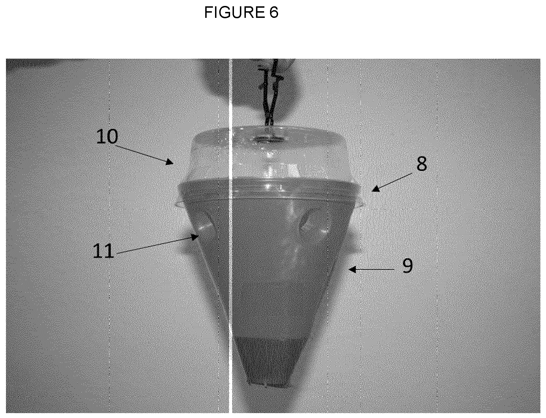

**Figure 6****.** Trap for attracting and killing *Ceratitis capitata.* Trapping device (8) comprising an entrapment chamber (9) confined by a lid (10). The entrapment chamber (9) comprising several inlets (11), at least one contact insecticide (not shown) and the device (1) (not shown).
**Figure 7****.** Transverse view of the entrapment chamber (9). Inner part of the entrapment chamber (9) with inner part of the inlets (11) and containing the device (1).
**Figure 8****.** Attachment of the device (1). Device (1) placed and blocked within the entrapment chamber (9) by means of flanges (12).

### DETAILED DESCRIPTION OF THE INVENTION

The first aspect relates to a device (1) for attracting dipterans that comprises
- a container (2) comprising walls (3), a bottom (4) and an opening (5) that is closed with a lid (6), wherein the lid (6) comprises a membrane (6A) which comprises a semi-permeable material
   wherein the walls (3) and the bottom (4) are made of an impermeable material, and
- wherein the content of said container (2) consists of an aqueous composition (7), wherein said aqueous composition comprises attractant salts for dipterans.

According to the claimed invention, the attractant salts for dipterans are selected from the list consisting of, ammonium acetate, trimethylamine hydrochloride or combinations thereof. Furthermore, the device (1) does not comprise a cellulose support wherein the aqueous composition (7) is absorbed to ensure the adequate adsorption and release of the composition by capillarity as needed in the prior art.

In the context of the present invention, the term membrane refers to a membrane that allows the exchange of vapors, but not water or any liquid phase. Said membranes area also refer as semipermeable membranes. These membranes comprise means or sheets containing or made of semipermeable materials. Preferably, the semipermeable membrane of the first aspect of the invention has a water vapor transmission rate from 500-3300 g. m-². d⁻¹, preferably from 1000-2500 g. m-². d⁻¹, preferably from 1100-1900 g. m-². d⁻¹, more preferably from 1300-1800 g. m-². d⁻¹

In the context of the present invention, the term "semi-permeable material" refers to the characteristic of the material that allows the exchange of vapors of the aqueous composition (7) between the inside and outside of the device. Preferably, the semi-permeable material of the membrane comprises at least a layer of high-density polyethylene, preferably a layer of high-density polyethylene fibers and optionally it also comprises a layer of polypropylene.

According to the claimed invention, the aqueous composition (7) further comprises silica, that is SiO₂. The silica reduces the aggregation of the attractant salts within the aqueous composition (7) improving the stability of the composition and its effectiveness when attracting Diptera.

In the context of the present invention, the term "aqueous composition (7)" may be a solution, a suspension or a dispersion. Preferably, the aqueous composition (7) is a suspension or a dispersion.

In a preferred embodiment of the first aspect, the impermeable material comprises at least one layer of an impermeable material wherein the water permeability coefficient (P0) is equal or higher than 0.0001-3.0 g·mm.m⁻²·d⁻¹, preferably from 0.0005 -0.40 g·mm.m⁻²·d⁻¹ or a water vapor transmission rate from 1-60 g.m⁻². d⁻¹, preferably from 2-40 g.m⁻². d⁻¹. The water permeability coefficient was measured at 37°C, 0.98 atm (1 bar) and 90% of relative humidity. The water vapor transmission rate was measured at 25°C and 1 atm.

In a preferred embodiment of the first aspect, the material of the at least one layer of an impermeable material of the walls (3) and the bottom (4) is selected from the list consisting of polyethylene, polypropylene, polystyrene, polyethylene terephthalate, polymethyl methacrylate (PMMA), polystyrene-acrylonitrile (SAN), acrylonitrile butadiene styrene (ABS) and combinations thereof. More preferably, the material of the at least one layer of an impermeable material is selected from the list consisting of polyethylene and polyethylene terephthalate. Even more preferably, the polyethylene is low density polyethylene

In more preferred embodiment, the impermeable material comprises at least one layer of polyethylene and at least one layer of polyethylene terephthalate. Even more preferably, the layer of polyethylene is placed in the inner part of the container (2) walls (3) and bottom (4) in direct contact with the aqueous composition (7). Therefore, the walls (3) and the bottom (4) are impermeable so that the only part of the device that allows the vapor exchange of the attractant composition is the lid (6) that closes the opening (5), wherein the lid (6) comprises a membrane (6A) which comprises a semi-permeable material.

In a preferred embodiment of the first aspect, the thickness of the walls (3) and the bottom (4) of the container (2) is of at least 0.35 mm, preferably from 0.35 to 3 mm, preferably from 0.5-1.5 mm. The thickness of the walls (3) and the bottom (4) ensures that the aqueous composition (7) is not released through the impermeable material and only via the membrane (6A) of the lid (6).

In a preferred embodiment of the first aspect, the container (2) may have a conical, frustoconical or cylindrical shape. In a preferred embodiment, the container (2) has a frustoconical shape comprising walls (3), an opening (5) and a bottom (4). In a more preferred embodiment, the container (2) having the frustoconical shape comprises an opening (5) and bottom (4) having a circular shape. In a more preferred embodiment, the opening (5) has a diameter from 35-100mm; more preferably from 40-80mm; even more preferably from 40-65mm and/or the diameter of the bottom (4) is preferably from 25-50mm; more preferably from 25-35mm. In a preferred embodiment the height (2a) of the container (2) is from 20-100mm; more preferably from 25-75mm; even more preferably from 25-60mm.

The above dimensions of the container (2) allow to fill it with the appropriate amount of the attractant composition (7) for the device to be used effectively for a long period of time in the field, ensures a sustain release of the attractant components via the membrane (6A) as well as it allows to manufacture an attractant device (1) that can be easy placed in any trapping device (8).

The lid (6) can have the same size or diameter as the size or diameter of the opening or the lid (6) can have a slightly larger size or diameter than the opening (5), In a preferred embodiment, the lid (6) has the same diameter or size as the opening (5). Preferably, the membrane (6A) comprised in the lid (6) has the same diameter or size as the opening (5), and the membrane (6A) comprises a semi-permeable material that allows the exchange of vapors of the aqueous composition (7). Therefore, the vapors of the components of the aqueous composition (7) are released through the membrane (6A) that has the same diameter or size as the opening (5). The membrane comprised in the lid (6) can also have a smaller diameter or size than the opening (5).

In a preferred embodiment, the walls (3) of the container can have ridges where the lid (6) rests. Preferably, the opening (5) of the container (2) may be closed with a lid (6) that comprises the membrane (6A), by heat sealing.

In a preferred embodiment of the first aspect, the membrane (6A) has a water vapor transmission rate from 500-3300 g. m-². d⁻¹, preferably from 1000-2500 g. m⁻². d⁻¹, preferably from 1100-1800 g. m-². d⁻¹.

In a preferred embodiment of the first aspect, the semi-permeable material of the membrane (6A) comprises at least a layer of high-density polyethylene (HDPE), preferably layer of high-density polyethylene fibers. The semi-permeable material of the membrane (6A), may also comprise polypropylene.

In a preferred embodiment of the first aspect, the membrane (6A) is sealed or covered with a layer of an impermeable material (not shown) situated over the semi-permeable material of the membrane (6A) and which is suitable to be removed before the use of the device or wherein the device (1) is covered and/or enclosed by a layer of an impermeable material which is suitable to be removed before the use of the device (1). The use of this layer minimizes the risk of contamination and the risk of particulates been introduced in the aqueous composition (7) which may affect the rate of release. Furthermore, it allows the release the vapors of the aqueous composition (7) once the device (1) is placed in the field, as the release will begin as soon as the layer of an impermeable material which covers or encloses the membrane (6A) is removed.

In a preferred embodiment of the first aspect, the aqueous composition (7) comprises:
a) from 44-74% by weight of attractant salts for dipterans,
b) from 40%-10% by weight of water, and
   optionally from 0.1%-15% by weight of silica,
   all % are referred to the total weight of the aqueous composition (7).

The percentage of the components are referred to the total weight of the composition (7)

The aqueous composition (7) of the first aspect shows high effectivity and a good release, without the need to use an aminoalkane. In a prefer embodiment of the first aspect, the aqueous composition (7) does not comprise an aminoalkane selected from cadaverine or putrescine, more preferably it does not comprise an aminoalkane.

In a more preferred embodiment of the first aspect, the aqueous composition (7) comprises ammonium acetate in a range from 45%-65% w/w %, to the total weight of the aqueous composition (7) and/or trimethylamine hydrochloride in a range from 5-9% w/w % to the total weight of the aqueous composition (7).

In another more preferred embodiment of the first aspect, the device (1) comprises from 5-50 g of aqueous composition (7) preferably from 10-25g.

In a more preferred embodiment of the first aspect, the dipterans are selected from a genus selected from the list consisting of *Bractocera spp., Ceratitis spp.,* and combinations thereof. More specifically, the dipterans from the genus *Cerattitis spp.*, are dipterans from the species *Ceratitis capitata.*

The second aspect describes a method for obtaining the device (1) according to the first aspect, the method comprising the steps of:
(i) providing an aqueous composition (7), wherein the composition (7) comprises attractant salts for dipterans and water,
(ii) filling an empty container (2) with the composition obtained in step (i), wherein said container (2) comprises an opening (5), walls (3) and a bottom (4), both the walls (3) and the bottom (4) made of an impermeable material,
(iii) closing, preferably hermetically, the opening (5) of the container (2) with a lid (6) which comprises a membrane (6), wherein said membrane comprises a semi-permeable material.

In a preferred embodiment, the walls (3) of the container can have ridges where the lid (6) rests. Preferably, the opening (5) of the container (2) may be closed with a lid (6) that comprises the membrane (6A), by heat sealing.

In a preferred embodiment of the second aspect, the aqueous composition of step (i) further comprisessilica.

In a preferred embodiment of the second aspect, the attractant salts for dipterans are selected from the list consisting of; ammonium acetate, trimethylamine hydrochloride and combinations. In a preferred embodiment of the second aspect, the aqueous composition (7) of step (i) comprises:
a) From 44-74% by weight of attractant salts for dipterans.
b) From 40%-10% by weight of water, and
Optionally from 0.1-15% by weight of silica.

The percentage of the components are referred to the total weight of the composition (7).

In a preferred embodiment of the second aspect, the attractant salts for dipterans comprise ammonium acetate in a range from 45%-65%, w/w %, to the total weight of the aqueous composition (7).

In a preferred embodiment of the second aspect, the attractant salts for dipterans comprise trimethylamine hydrochloride in a range from 5-9%, w/w % with respect to the total weight of the aqueous composition (7).

In a preferred embodiment of the second aspect, the step (i) is carried out by mixing at least water and the attractant salts for dipterans and optionally silica followed by stirring the mixture until the aqueous composition (7) is obtained.

In a preferred embodiment of the second aspect, the step (ii) comprises filling the empty container (5) of step ii) with from 5-50g of the aqueous composition (7) obtained in step i), preferably with an amount from 10-25 g of the aqueous composition (7) of step i).

In a preferred embodiment of the second aspect, the container is as the container (2) of the device (1) according to the first aspect or any of the embodiments of the first aspect.

The third aspect refers to a device (1) obtainable by the method of the second aspect or any of the embodiments of the second aspect

The fourth aspect relates to a method for attracting and trapping dipterans that comprises:
(i) introducing the device (1) according to the first aspect or the third aspect or the device obtained from the second aspect inside a trapping device (8),
(ii) leaving the trapping device (8) of step i) for a at least 2 days in a place of interest. The place of interest can be a field, a tree or any hanging device.

In a preferred embodiment of the fourth aspect, the step (ii) comprises leaving the trapping device (8) in a place of interest for at least 4 weeks. More preferably, the trapping device (8) is left in a place of interest for at least 4 months and more preferably for at least 6 months.

In a preferred embodiment of the fourth aspect, the humidity of the place of interest is from 40%-90% and/or the temperature in the place of interest is from 5-50°C.

The fifth aspect refers to the use of the device (1) according to any of the first aspect or the third aspect to trap dipterans.

In a preferred embodiment of the fifth aspect, the dipterans are from a genus selected from the list consisting of *Bractocera spp.*, *Ceratitis spp.*, and combinations thereof. More specifically, dipterans from the genus *Ceratitis spp.* Comprise dipterans from the species *Ceratitis capitata.*

The sixth aspect relates to a trapping device (8) adapted to attract and kill Diptera from a genus selected from the list consisting of *Bractocera spp., Ceratitis spp,* preferably the *Ceratitis capitata* fly, wherein said trapping device (8) comprises:
- An entrapment chamber (9) confined by a lid (10) which is removable attached to said entrapment chamber (9), wherein the entrapment chamber (9) comprises:
   o walls
   o at least one inlet (11) configured for the entry of Diptera, and
   o at least one contact insecticide (not shown)
   wherein the inner wall of the entrapment chamber (9) is at least partially coated with the contact insecticide (not shown);
   and
- the device (1) of the first aspect, placed within the entrapment chamber (9), preferably towards the bottom of the entrapment chamber (9).

In a preferred embodiment of the sixth aspect, the trapping device (8) is left in a place of interest, for example a field, for at least 2 days. More preferably, the trapping device (8) is left in a place of interest for at least 4 weeks. More preferably, the trapping device (8) is left in a place of interest for at least 4 months and more preferably for at least 6 months, as the device is effective in attracting and killing dipterans for said period of time.

Another important advantage of the invention lies in its simplicity and cost. In particular, the proposed solution does not require additional support elements for the device (1) of the first aspect or for the contact insecticide, since the trapping device (8) itself acts as a holder for both. This drastically reduces the cost of use and makes it easier to implement for mass entrapment and mass elimination of Diptera insects from a genus selected from the list consisting of *Bractocera spp., Ceratitis spp.* Genus, in particular *Ceratitis capitata.* It is worth mentioning that, according to the invention, the inner wall of the entrapment chamber (8) does not have to be completely coated with contact insecticide in order for it to kill the insects. In another preferred embodiment, the inner walls of lid (10) of the trapping device (8) can also be partially or fully coated with the contact insecticide.

In another preferred embodiment of the sixth aspect, the entrapment chamber (9) may have a conical, frustoconical or cylindrical shape with an essentially round base, to improve and facilitate the collection and removal of insects when the entrapment chamber (9) is full.

Once the Diptera have been attracted into the entrapment chamber (9) of the trapping device of the sixth aspect, through at least one inlet (11), in search of the exit and during this flight, it hits the inner walls of said entrapment chamber (9), where it dies due to physical contact with the contact insecticide. Therefore, after the capture of the Diptera inside the entrapment chamber (9), their death occurs as a result of their contact with the contact insecticide. Preferably, the contact insecticides are selected from the list consisting of pyrethroids and pyrethrins.

More preferably, the pyrethroids are selected from the list consisting of Fluvalinate, Cyfluthrin, Bifenthrin, Fenpropathrin, Resmethrin, Sumithrin, Permethrin, Esfenvalerate, Cypermethrin, Lambda-Cyhalothrin, Deltamethrin, Pyrethrin, Tefluthrin, Tetramethrin and Tralomethrin. In a more preferred embodiment, the pyrethroids are selected form the list consisting of Deltamethrin, Lambda-Cyhalothrin, Cypermethrin and Esfenvalerate.

In a preferred embodiment of the sixth aspect, the lid (10) may be a removable lid, such that the trap can be reused multiple times or can be emptied when a high number of captures occurs.

In another preferred embodiment of the sixth aspect, the lid (10) is configured to be coupled to the entrapment chamber (9) by pressure through a blocking system (not shown). Preferably, the blocking system can be a "snap fit" (releasable connection) system or a turn system. Even more preferably, there is a releasable connection system in the blocking system wherein the lid (10) is configured with protrusions (not shown) that snap into an edge of the confinement chamber by pressure. Alternatively, when the blocking system is a turn system, the lid (10) comprises a slot and the edge of the entrapment chamber (9) comprises a protrusion in the shape of a tooth adapted to fit into the slot of the lid (10) by turning the chamber and/or lid (10), preferably anticlockwise.

To trap Diptera insects of the *Ceratitis spp. Genus,* the entrapment chamber (9) comprises at least one inlet (11) configured to enable the Diptera to enter into the entrapment chamber (9). Preferably, the trap comprises a plurality of inlets (11) arranged in the walls that form the entrapment chamber (9), thus facilitating the entry of the Diptera into the entrapment chamber (9) and increasing the number of captures for trapping device (8).

In another preferred embodiment of the trapping device (8) of the sixth aspect, the inlet (11) is provided with a blocking element or part (not shown) configured to prevent the Diptera from exiting the entrapment chamber (9) once they have entered inside said entrapment chamber (9) and/or to prevent the entry of larger non-target insects that are not *Ceratitis capitata.*

In another preferred embodiment of the trap of the sixth aspect, the inlet (11) is circular in shape such that the blocking part takes the form of a vertically oriented diametrical rib.

In a preferred embodiment of the sixth aspect, the device (1) of the first aspect is removable arranged within the entrapment chamber (9). Preferably, the device (1) is coupled or engaged within the entrapment chamber (9) by pressure through a blocking system. Preferably, the blocking system can be a "snap fit" (releasable connection) system or a turn system. Even more preferably, the blocking system comprises flanges (12) that are located on or attached to the internal walls of the entrapment chamber (9). The device (1) has the advantage that can be easily placed within the entrapment chamber (9) and can be easily removed to be replaced when the aqueous composition (7) of the device (1) is fully consumed.

In a preferred embodiment of the sixth aspect, the inlet (11) is formed in the walls (3) of the entrapment chamber (9) from a circular perforation such that the blocking part takes the form of a vertically oriented diametrical rib in the circular perforation.

In a preferred embodiment of the sixth aspect, the entrapment chamber (9) is opaque and/or the lid (10) is translucent or opaque. The trapping device (8) may be made of polymeric material suitable for said preferred embodiment.

In a preferred embodiment of the sixth aspect, the polymeric material is selected from the list consisting of polyethylene, high-density polyethylene, medium-density polyethylene and low-density polyethylene, polyethylene copolymers, polypropylene, polypropylene copolymers, polystyrene, polyethylene terephthalate, polymethyl methacrylate, polystyrene-acrylonitrile, acrylonitrile butadiene styrene and mixtures thereof.

### Examples

### Example 1

A device (1) as in the first aspect was manufactured. The walls (3) and the bottom(4) of the container (2) comprised a layer of polyethylene terephthalate and an inner layer made of polyethylene. The device had a frustoconical shape wherein the opening (5) had a diameter of 43mm; the diameter of the bottom (4) was 31mm and the height (2a) of the container (2) was 31mm. The container was filled with 15 g of an aqueous composition (7) which was obtained by mixing the appropriate amounts of water, ammonium acetate, trimethylamine hydrochloride and silica followed by stirring until the aqueous composition is obtained. The amounts of each component in the composition are detailed in the table 1. After adding the aqueous compositions in the device of the first aspect, the upper opening was closed by means of hermetic and heat sealing with a semi-permeable material that conforms the membrane with a water vapor transmission rate from 1100-1800 g. m-². D⁻¹. The diameter of the lid was 54.5mm and the diameter of the membrane covering the opening was 43 mm. The membrane (6A) had a semi-permeable material made of high-density polyethylene (non-woven polyethylene).

**Table 1. Aqueous composition of example 1 comprising attractant salts.**

| Component | Amount in g in the composition | Amount in % in the composition |
|---|---|---|
| Ammonium acetate | 9.00 | 60.00 |
| Trimethylamine hydrochloride | 1.00 | 6.67 |
| Silica | 2 | 13.13 |
| Water | 3.00 | 20.00 |
| Total | 15,00 | 100 |

### Example 2

A further device (1) as in the first aspect was manufactured. The walls (3) and the bottom (4) of the container (2) comprised a layer of polyethylene terephthalate and an inner layer made of polyethylene. The device had a frustoconical shape wherein the opening (5) had a diameter of 43mm; the diameter of the bottom (4) was 31mm and the height (2a) was 31mm.The container was filled with 13.04g of an aqueous composition which was obtained by mixing the appropriate amounts of water, ammonium acetate, trimethylamine hydrochloride, followed by stirring until the aqueous composition is obtained. The amounts of each component are detailed in the table 2. After adding the aqueous compositions in the device of the first aspect, the upper opening was closed by means of hermetic and heat sealing with a semi-permeable material that conforms the membrane with a water vapor transmission rate from 1100-1800 g. m-². d⁻¹. The diameter of the lid was 54.5 mm and the diameter of the membrane covering the opening was 43 mm. The semi-permeable material of the membrane comprised high-density polyethylene (non-woven polyethylene).

**Table 2. Aqueous composition of example 2 comprising attractant salts**

| Component | Amount in g in the composition | Amount in % in the composition |
|---|---|---|
| Ammonium acetate | 9.04 | 69.51 |
| Trimethylamine hydrochloride | 1.00 | 7.67 |
| Silica | 0.00 | 0.00 |
| Water | 3.00 | 23.01 |
| Total | 13.04 | 100 |

### Reference example

A further device was manufactured as reference example. This device had a shape of an envelope. The device was filled with 12.0g of a dry composition which was obtained by mixing the appropriate amounts of ammonium acetate, trimethylamine hydrochloride, putrescine and silica. The amounts of each component are detailed in the table 3. The envelope device comprised a semi-permeable membrane that closed an opening on one side. Said membrane allowed the exchange of vapors of the attractant substances. On the other side, the device comprised a material that was impermeable to vapors. The semi-permeable material that conforms the membrane had a water vapor transmission rate from 1100-1800 g. m-². d⁻¹. The semi-permeable material of the membrane comprised high-density polyethylene (non-woven polyethylene). This device was uses as reference.

**Table 3. Composition of the reference sample.**

| Component | Amount in g in the composition | Amount in % in the composition |
|---|---|---|
| Ammonium acetate | 9.00 | 75 |
| Trimethylamine hydrochloride | 1.00 | 8.33 |
| Putrescine | 0.04 | 0.33 |
| Silica | 1.96 | 16.33 |
| Water | 0.00 | 0.00 |
| Total | 12.00 | 100 |

### Preparation of a trapping device (8) according to the sixed aspect

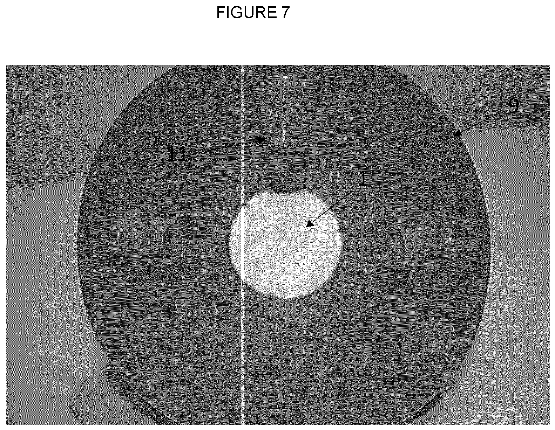

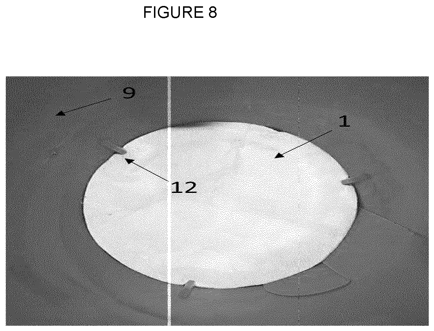

The devices manufactured in the examples 1, 2 and reference example were introduced within a trapping device as that of the sixth aspect. The trapping device comprised an entrapment chamber confined by a lid that can be coupled to and removed from said chamber. The entrapment chamber comprised one inlet configured for the entry of Diptera. The inner wall of the entrapment chamber and the inner wall of the lid were coated with a contact insecticide. The devices of the examples 1, 2 or reference example were placed within the entrapment chamber of different trap devices. Afterwards the lid of the trapping device was closed and 3 trapping devices were placed in citrus fields for up to 4 months. The number of trapped and killed *Ceratitis capitata* flies was measured once or two times a week for approximately 4 months. Results are shown in table 4 as the cumulative value. These results are shown in table 4 and are also compared with the data of the experiments from ES2257219B1, wherein two different types of trapping devices comprising diffusors for attracting Diptera were described and tested. 3 trapping devices were also used. Figure 7 and figure 8 of ES2257219B1 correspond to two different trapping device configurations placed and tested in different fields of citrus or peaches (see table 4 below).

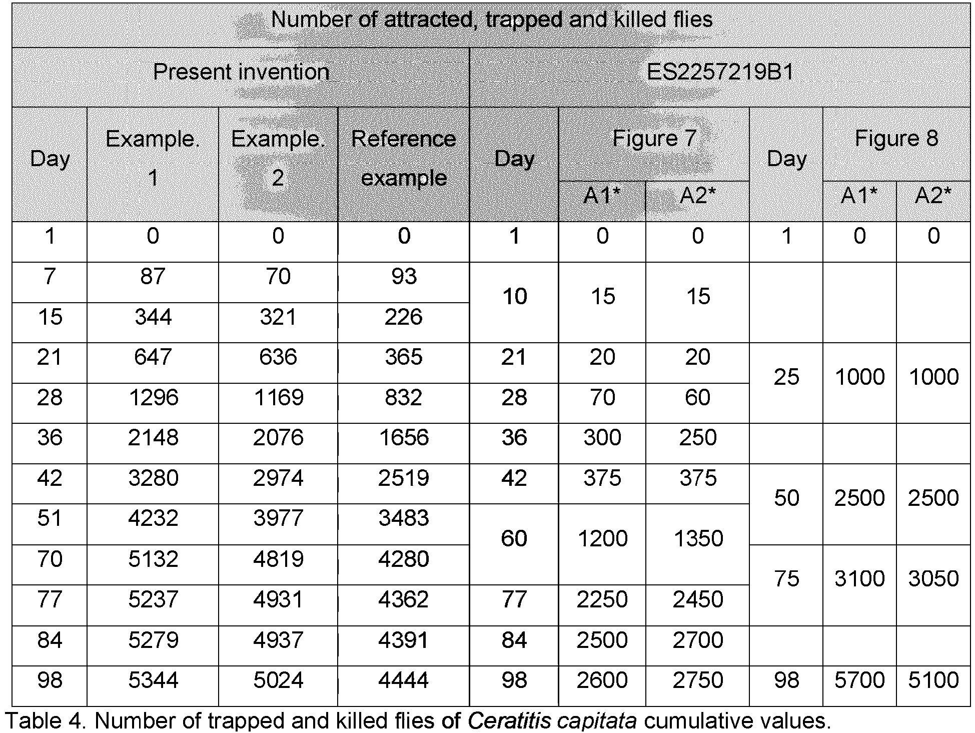

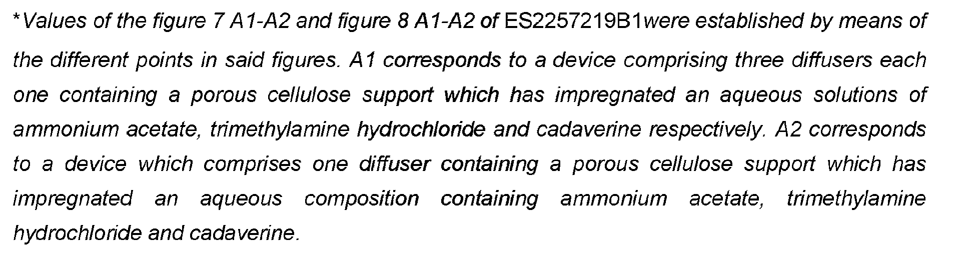

The trapping device containing the devices of examples 1 and 2 showed a higher number of attracted, trapped and killed *Ceratitis capitata* flies than the traps containing the reference example device. Therefore, the trapping device comprising the device of the first aspect, attracted, trapped and killed more flies than the traps comprising a device according to the reference composition (dry composition). Thus, the trapping device of comprising the device of the first aspect was more effective than the trapping device comprising the reference composition (Envelope shape and filled with a dry composition of said attractants salts).

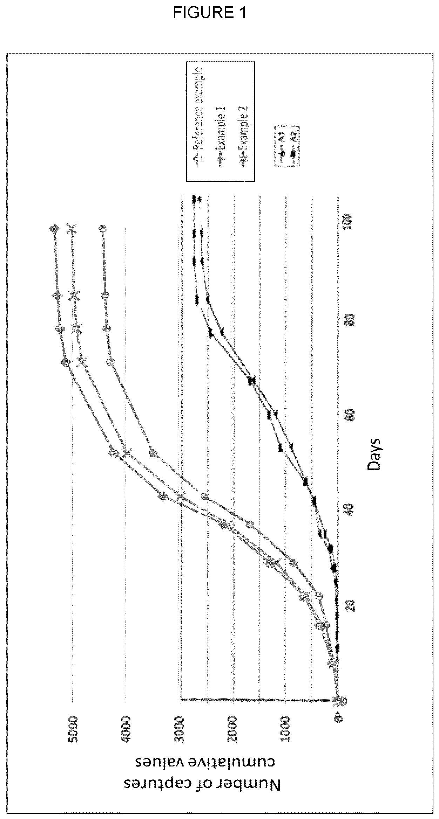

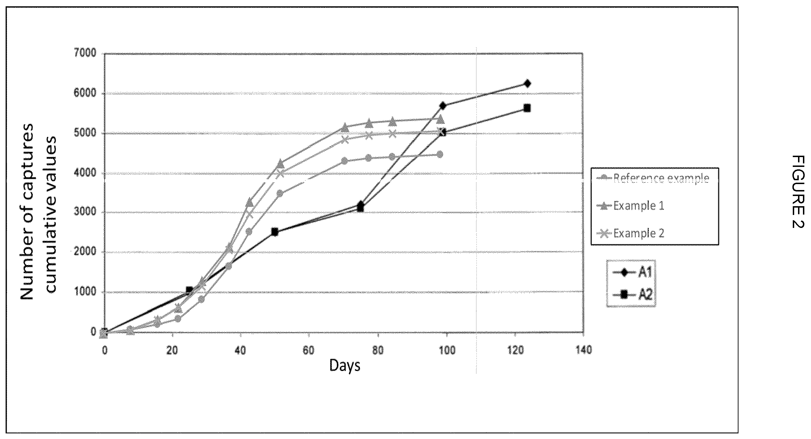

Likewise, the trapping devices according to the sixth aspect, comprising the attractant devices of examples 1 and 2, showed higher cumulative values of attracted, trapped and killed flies than those of the reference sample of ES2257219B1, as can be seen from table 4 and from figures 1 and 2.

## Claims

1. A device (1) for attracting dipterans that comprises:
- a container (2) comprising walls (3), a bottom (4) and an opening (5) that is closed with a lid (6), wherein the lid (6) comprises a membrane (6A) which comprises a semi-permeable material
- wherein the walls (3) and the bottom (4) are made of an impermeable material, and
- wherein the content of said container (2) consists of an aqueous composition (7), wherein said aqueous composition comprises attractant salts for dipterans selected from the list consisting of ammonium acetate, trimethylamine hydrochloride and combinations thereof, and wherein said aqueous composition (7) further comprises silica.

2. The device (1) according to claim 1, which does not comprise inside the container (2) a cellulose support.

3. The device (1) according any preceding claims, wherein said aqueous composition does not comprise a diaminoalkane selected from the list consisting of putrescine, cadaverine and combinations thereof, preferably it does not comprise a diaminoalkane.

4. The device (1) according any preceding claims, wherein the impermeable material comprises at least one layer of an impermeable material with a water permeability coefficient equal or higher than 0.0001-3.0 g·mm.m⁻²·d⁻¹, preferably from 0.0005-0.40 g·mm.m⁻²·d⁻¹ or a water vapor transmission rate from 1-60 g.m⁻². d⁻¹, preferably from 2-40 g.m⁻². d⁻¹.

5. The device (1) according any preceding claims, wherein the material of the at least one layer of an impermeable material is selected from the list consisting of polyethylene, low density polyethylene, polypropylene, polystyrene, polyethylene terephthalate, polymethyl methacrylate, polystyrene-acrylonitrile, acrylonitrile butadiene styrene and combinations thereof.

6. The device (1) according to any preceding claims, wherein the thickness of the walls (3) and the bottom (4) of the container (2) is of at least 0.35 mm, preferably from 0.35 to 3 mm, preferably from 0.5-1.5 mm and /or wherein the height (2a) of the container (2) is from 20 mm to 100 mm; the diameter of the opening (5) is from 35 mm to 100 mm; the diameter of the bottom is 25-50mm.

7. The device (1) according to any of the preceding claims, wherein the membrane (6A) has a water vapor transmission rate from 500-3300 g. m-². d⁻¹, preferably from 1000-2500 g. m-². d⁻¹ and/or the semi-permeable material of the membrane (6A) comprises a layer of high-density polyethylene.

8. The device (1) according to any of the preceding claims, wherein the membrane (6A) is sealed or covered with a layer of an impermeable material situated over the semipermeable material of the membrane (6A) and which is suitable to be removed before the use of the device (1) or wherein the device (1) is covered and/or enclosed by a layer of an impermeable material which is suitable to be removed before the use of the device (1).

9. The device (1) according to any of the preceding claims, wherein the aqueous composition (7) comprises:
a) from 44-74% by weight of attractant salts for dipterans,
b) from 40%-10% by weight of water, and
c) from 0.1-15% by weight of silica,
all % to the total weight of the attractant composition (7).

10. The device (1) according to any of the preceding claims, wherein the device (1) comprises from 5-50 g, preferably from 10-25 g, of aqueous composition (7).

11. The device (1) according to any of the preceding claims, wherein the dipterans are selected from a genus selected from the list consisting of *Bractocera spp., Ceratitis spp.,* and combinations thereof.

12. A method for obtaining the device (1) according to any of the claims 1-11 which comprises the steps of:
(i) providing an aqueous composition (7), wherein the aqueous composition comprises attractant salts for dipterans selected from the list consisting of ammonium acetate, trimethylamine hydrochloride and combinations thereof, the composition (7) further comprises silica.
(ii) filling an empty container (2) with the aqueous composition obtained from step (i),
wherein said container (2) comprises an opening (5), walls (3) and a bottom (4), both the walls (3) and the bottom (5) made of an impermeable material,
(iii) closing, preferably hermetically, the opening (5) of the container with a lid (6) which comprises a membrane (6A), wherein said membrane comprises a semi-permeable material.

13. A trapping device (8) adapted to attract and kill Diptera, preferably *Ceratitis capitata* fly, wherein said trapping device (8) comprises:
- an entrapment chamber (9) confined by a lid (10) which is removably attached to said entrapment chamber (9), wherein the entrapment chamber (9) comprises:
∘ walls
∘ at least one inlet (11) configured for the entry of Diptera, and
∘ at least one contact insecticide
wherein the inner wall of the entrapment chamber (9) is at least partially coated with the contact insecticide;
and
- the device (1) according to any of the claims 1-11, placed within the entrapment chamber (9), preferably towards the bottom of the entrapment chamber (9).

14. A method for trapping dipterans, preferably *Ceratitis capitata* fly, that comprises the steps of:
(i) introducing the device (1) according to any of claims 1-11 inside a trapping device (8),
(ii) leaving the trapping device (8) of step i) for at least 2 days in a place of interest.

## Patentansprüche

1. Vorrichtung (1) zum Anlocken von Dipteren, die Folgendes umfasst:
- einen Behälter (2) umfassend Wände (3), einen Boden (4) und eine Öffnung (5), die mit einem Deckel (6) verschlossen ist, wobei der Deckel (6) eine Membran (6A) umfasst, die ein semipermeables Material umfasst
- wobei die Wände (3) und der Boden (4) aus einem undurchlässigen Material hergestellt sind, und
- wobei der Inhalt des Behälters (2) aus einer wässrigen Zusammensetzung (7) besteht, wobei die wässrige Zusammensetzung Lockstoffsalze für Dipteren umfasst, die ausgewählt sind aus der Liste bestehend aus Ammoniumacetat, Trimethylaminhydrochlorid und Kombinationen davon, und wobei die wässrige Zusammensetzung (7) ferner Siliciumdioxid umfasst.

2. Vorrichtung (1) nach Anspruch 1, die innerhalb des Behälters (2) keinen Celluloseträger umfasst.

3. Vorrichtung (1) nach einem der vorhergehenden Ansprüche, wobei die wässrige Zusammensetzung kein Diaminoalkan umfasst, das aus der Liste bestehend aus Putrescin, Cadaverin und Kombinationen davon ausgewählt ist, vorzugsweise umfasst sie kein Diaminoalkan.

4. Vorrichtung (1) nach einem der vorhergehenden Ansprüche, wobei das undurchlässige Material mindestens eine Schicht aus einem undurchlässigen Material mit einem Wasserdurchlässigkeitskoeffizienten von gleich oder höher als 0,0001-3,0 g·mm.m⁻²·d⁻¹ umfasst, vorzugsweise von 0,0005-0,40 g·mm.m⁻²·d⁻¹ oder eine Wasserdampfdurchlässigkeitsrate von 1-60 g·m⁻²·d⁻¹ aufweist, vorzugsweise von 2-40 g·m-²·d-¹.

5. Vorrichtung (1) nach einem der vorhergehenden Ansprüche, wobei das Material der mindestens einen Schicht aus einem undurchlässigen Material aus der Liste bestehend aus Polyethylen, Polyethylen niedriger Dichte, Polypropylen, Polystyrol, Polyethylenterephthalat, Polymethylmethacrylat, Polystyrol-Acrylnitril, Acrylnitril-Butadien-Styrol und Kombinationen davon ausgewählt ist.

6. Vorrichtung (1) nach einem der vorhergehenden Ansprüche, wobei die Dicke der Wände (3) und des Bodens (4) des Behälters (2) mindestens 0,35 mm, vorzugsweise von 0,35 bis 3 mm, vorzugsweise von 0,5-1,5 mm beträgt und/oder wobei die Höhe (2a) des Behälters (2) von 20 mm bis 100 mm beträgt; der Durchmesser der Öffnung (5) von 35 mm bis 100 mm beträgt; der Durchmesser des Bodens 25-50 mm beträgt.

7. Vorrichtung (1) nach einem der vorhergehenden Ansprüche, wobei die Membran (6A) eine Wasserdampfdurchlässigkeitsrate von 500-3300 g·m⁻²·d⁻¹, vorzugsweise von 1000-2500 g·m⁻²·d⁻¹ aufweist, und/oder das semipermeable Material der Membran (6A) eine Schicht aus Polyethylen hoher Dichte umfasst.

8. Vorrichtung (1) nach einem der vorhergehenden Ansprüche, wobei die Membran (6A) mit einer Schicht aus einem undurchlässigen Material versiegelt oder bedeckt ist, die sich über dem semipermeablen Material der Membran (6A) befindet und die geeignet ist, vor der Verwendung der Vorrichtung (1) entfernt zu werden, oder wobei die Vorrichtung (1) von einer Schicht aus einem undurchlässigen Material bedeckt und/oder umschlossen ist, die geeignet ist, vor der Verwendung der Vorrichtung (1) entfernt zu werden.

9. Vorrichtung (1) nach einem der vorhergehenden Ansprüche, wobei die wässrige Zusammensetzung (7) Folgendes umfasst:
a) 44-74 Gew.-% Lockstoffsalze für Dipteren,
b) 40-10 Gew.-% Wasser und
c) 0,1-15 Gew.-% Siliciumdioxid,
alle % bezogen auf das Gesamtgewicht der Lockstoffzusammensetzung (7).

10. Vorrichtung (1) nach einem der vorhergehenden Ansprüche, wobei die Vorrichtung (1) 5-50 g, vorzugsweise 10-25 g, der wässrigen Zusammensetzung (7) umfasst.

11. Vorrichtung (1) nach einem der vorhergehenden Ansprüche, wobei die Dipteren aus einer Gattung aus der Liste ausgewählt sind, die aus *Bractocera* spp., *Ceratitis* spp. und Kombinationen davon besteht.

12. Verfahren zum Erhalten der Vorrichtung (1) nach einem der Ansprüche 1-11, das die folgenden Schritte umfasst:
(i) Bereitstellen einer wässrigen Zusammensetzung (7), wobei die wässrige Zusammensetzung Lockstoffsalze für Dipteren umfasst, die aus der Liste bestehend aus Ammoniumacetat, Trimethylaminhydrochlorid und Kombinationen davon ausgewählt sind, wobei die Zusammensetzung (7) ferner Siliciumdioxid umfasst,
(ii) Befüllen eines leeren Behälters (2) mit der in Schritt (i) erhaltenen wässrigen Zusammensetzung, wobei der Behälter (2) eine Öffnung (5), Wände (3) und einen Boden (4) umfasst, wobei sowohl die Wände (3) als auch der Boden (5) aus einem undurchlässigen Material hergestellt sind,
(iii) Verschließen, vorzugsweise hermetisch, der Öffnung (5) des Behälters mit einem Deckel (6), der eine Membran **(6A) umfasst,** wobei die Membran ein semipermeables Material umfasst.

13. Fangvorrichtung (8), die dazu ausgelegt ist, Diptera, vorzugsweise die Fliege *Ceratitis capitata,* anzulocken und zu töten, wobei die Fangvorrichtung (8) Folgendes umfasst:
- eine Auffangkammer (9), die von einem Deckel (10) begrenzt wird, der abnehmbar an der Auffangkammer (9) befestigt ist, wobei die Auffangkammer (9) Folgendes umfasst:
∘ Wände
∘ mindestens einen Einlass (11), der dazu konfiguriert ist, Diptera einzulassen, und
∘ mindestens ein Kontaktinsektizid
wobei die Innenwand der Auffangkammer (9) mindestens teilweise mit dem Kontaktinsektizid beschichtet ist;
und
- die Vorrichtung (1) nach einem der Ansprüche 1-11, die innerhalb der Auffangkammer (9) platziert ist, vorzugsweise zum Boden der Auffangkammer (9) hin.

14. Verfahren zum Fangen von Dipteren, vorzugsweise der Fliege *Ceratitis capitata,* das folgende Schritte umfasst:
(i) Einführen der Vorrichtung (1) nach einem der Ansprüche 1-11 in eine Fangvorrichtung (8),
(ii) Aufbewahren der Fangvorrichtung (8) aus Schritt (i) für mindestens 2 Tage an einem Ort von Interesse.

## Revendications

1. Dispositif (1) destiné à attirer des diptères qui comprend :
- un récipient (2) comprenant des parois (3), un fond (4) et une ouverture (5) qui est fermée par un couvercle (6), dans lequel le couvercle (6) comprend une membrane (6A) qui comprend un matériau semi-perméable
- dans lequel les parois (3) et le fond (4) sont faits d'un matériau imperméable, et
- dans lequel le contenu dudit récipient (2) est constitué d'une composition aqueuse (7), dans lequel ladite composition aqueuse comprend des sels attractifs pour des diptères choisis dans la liste constituée par l'acétate d'ammonium, le chlorhydrate de triméthylamine et des combinaisons de ceux-ci, et dans lequel ladite composition aqueuse (7) comprend en outre de la silice.

2. Dispositif (1) selon la revendication 1, qui ne comprend pas à l'intérieur du récipient (2) de support en cellulose.

3. Dispositif (1) selon l'une quelconque des revendications précédentes, dans lequel ladite composition aqueuse ne comprend pas de diaminoalcane choisi dans la liste constituée par la putrescine, la cadavérine et des combinaisons de ceux-ci, de préférence elle ne comprend pas de diaminoalcane.

4. Dispositif (1) selon l'une quelconque des revendications précédentes, dans lequel le matériau imperméable comprend au moins une couche d'un matériau imperméable avec un coefficient de perméabilité à l'eau égal ou supérieur à une valeur allant de 0,0001 à 3,0 g·mm·m⁻²·d⁻¹, de préférence de 0,0005 à 0,40 g·mm.m⁻²·d⁻¹ ou un taux de transmission de vapeur d'eau de 1 à 60 g·m⁻²·d⁻¹, de préférence de 2 à 40 g·m⁻²·d⁻¹.

5. Dispositif (1) selon l'une quelconque des revendications précédentes, dans lequel le matériau de l'au moins une couche d'un matériau imperméable est choisi dans la liste constituée par le polyéthylène, le polyéthylène basse densité, le polypropylène, le polystyrène, le téréphtalate de polyéthylène, le polyméthacrylate de méthyle, le polystyrène-acrylonitrile, l'acrylonitrile-butadiène-styrène et des combinaisons de ceux-ci.

6. Dispositif (1) selon l'une quelconque des revendications précédentes, dans lequel l'épaisseur des parois (3) et du fond (4) du récipient (2) est d'au moins 0,35 mm, de préférence de 0,35 à 3 mm, de préférence de 0,5 à 1,5 mm et/ou dans lequel la hauteur (2a) du récipient (2) va de 20 mm à 100 mm ; le diamètre de l'ouverture (5) va de 35 mm à 100 mm ; le diamètre du fond est de 25 à 50 mm.

7. Dispositif (1) selon l'une quelconque des revendications précédentes, dans lequel la membrane (6A) a un taux de transmission de vapeur d'eau de 500 à 3 300 g·m⁻²·d⁻¹, de préférence de 1 000 à 2500 g·m⁻²·d⁻¹ et/ou le matériau semi-perméable de la membrane (6A) comprend une couche de polyéthylène haute densité.

8. Dispositif (1) selon l'une quelconque des revendications précédentes, dans lequel la membrane (6A) est scellée ou recouverte d'une couche d'un matériau imperméable située au-dessus du matériau semi-perméable de la membrane (6A) et qui est apte à être retirée avant l'utilisation du dispositif (1), ou dans lequel le dispositif (1) est recouvert et/ou enveloppé par une couche de matériau imperméable qui est apte à être retirée avant l'utilisation du dispositif (1).

9. Dispositif (1) selon l'une quelconque des revendications précédentes, dans lequel la composition aqueuse (7) comprend :
a) de 44 à 74 % en poids de sels attractifs pour des diptères,
b) de 40 % à 10 % en poids d'eau, et
c) de 0,1 à 15 % en poids de silice,
tous les % par rapport au poids total de la composition attractive (7).

10. Dispositif (1) selon l'une quelconque des revendications précédentes, dans lequel le dispositif (1) comprend de 5 à 50 g, de préférence de 10 à 25 g, de composition aqueuse (7).

11. Dispositif (1) selon l'une quelconque des revendications précédentes, dans lequel les diptères sont choisis parmi un genre choisi dans la liste constituée par *Bractocera spp., Ceratitis spp.,* et des combinaisons de ceux-ci.

12. Procédé destiné à obtenir le dispositif (1) selon l'une quelconque des revendications 1 à 11 qui comprend les étapes consistant à :
(i) fournir une composition aqueuse (7), dans lequel ladite composition aqueuse comprend des sels attractifs pour des diptères choisis dans la liste constituée d'acétate d'ammonium, de chlorhydrate de triméthylamine et des combinaisons de ceux-ci, la composition (7) comprend en outre de la silice,
(ii) remplir un récipient vide (2) avec la composition aqueuse obtenue à l'étape (i), dans lequel ledit récipient (2) comprend une ouverture (5), des parois (3) et un fond (4), les parois (3) et le fond (5) étant tous deux faits d'un matériau imperméable,
(iii) fermer, de préférence de manière hermétique, l'ouverture (5) du récipient avec un couvercle (6) qui comprend une membrane (6A), dans lequel ladite membrane comprend un matériau semi-perméable.

13. Dispositif de piégeage (8) adapté pour attirer et tuer des diptères, de préférence la mouche *Ceratitis capitata,* dans lequel ledit dispositif de piégeage (8) comprend :
- une chambre de capture (9) délimitée par un couvercle (10) qui est fixé de manière amovible à ladite chambre de capture (9), la chambre de capture (9) comprend :
∘ des parois
∘ au moins une entrée (11) conçue pour l'entrée de diptères, et
∘ au moins un insecticide de contact
dans lequel la paroi interne de la chambre de capture (9) est au moins partiellement recouverte de l'insecticide de contact ;
et
- le dispositif (1) selon l'une quelconque des revendications 1 à 11, placé à l'intérieur de la chambre de capture (9), de préférence vers le fond de la chambre de capture (9).

14. Procédé destiné à piéger des diptères, de préférence la mouche *Ceratitis capitata,* qui comprend les étapes consistant à :
(i) introduire le dispositif (1) selon l'une quelconque des revendications 1 à 11 à l'intérieur d'un dispositif de piégeage (8),
(ii) laisser le dispositif de piégeage (8) de l'étape i) pendant au moins 2 jours dans un lieu d'intérêt.
